# EUROPÄISCHE PATENTANMELDUNG

(11) **EP 1 923 582 A2**
(43) Veröffentlichungstag der Anmeldung: **21.05.2008**
(21) Anmeldenummer: 07021969.6
(22) Anmeldetag: 13.11.2007
(51) Int. Cl.: F16B 33/02, F16B 37/00, F16B 25/00

(54) **Befestigungsanordnung**

(30) Priorität: 14.11.2006 DE 202006017711 U
(71) Anmelder: Adolf Würth GmbH & Co. KG, 74653 Künzelsau (DE)
(72) Erfinder: Wolpert, Frank, 74635 Eschental (DE)
(74) Vertreter: Patentanwälte Ruff, Wilhelm, Beier, Dauster & Partner

(57) **Zusammenfassung**

Die Erfindung schlägt eine Befestigungsanordnung vor. Diese Befestigungsanordnung enthält eine Gewindestange (13) mit einem Holzgewinde (2). Mit dieser Gewindestange (13) können beispielsweise Holzelemente miteinander verbunden werden. Zur Anbringung von zusätzlichen Gegenständen wird vorgeschlagen, dass auf die Gewindestange (13) eine Mutter (6) aufschraubbar ist, die eine Innenöffnung (9) mit einem dem Holzgewinde (2) der Gewindestange (13) entsprechenden Gegengewinde (10) aufweist. Dadurch lässt sich an einem überstehenden Ende der Gewindestange ein zusätzlicher Gegenstand oder mehrere zusätzliche Gegenstände befestigen.

## Beschreibung

Die Erfindung betrifft eine Befestigungsanordnung für Holzkonstruktionen.

Als Befestigungselemente für metallische Konstruktionen sind Stehbolzen und Stiftschrauben bekannt. Diese haben ein metrisches Gewinde und werden in mit einem Gewinde versehene Bohrungen eingeschraubt. Die üblichen Muttern mit metrischem Innengewinde können auf den noch herausragenden Teil der Stiftschrauben und Stehbolzen aufgeschraubt werden.

Bei Holzkonstruktionen ist es bekannt, besonders belastete und damit gefährdete Bereiche dadurch zu stabilisieren, dass durch den gefährdeten Bereich Stahlstäbe hindurchgeführt werden, die zu einer Sicherung dieser gefährdeten Bereiche führen. Dies gilt beispielsweise bei Ausklinkungen und Durchbrüchen.

Der Erfindung liegt die Aufgabe zu Grunde, eine Befestigungsanordnung für Holzkonstruktionen zu schaffen, die ein auswechselbares Befestigen zusätzlicher Elemente ermöglicht.

Zur Lösung dieser Aufgabe schlägt die Erfindung eine Befestigungsanordnung mit den im Anspruch 1 genannten Merkmalen vor. Weiterbildungen der Erfindung sind Gegenstand von Unteransprüchen.

Die von der Erfindung vorgeschlagene Befestigungsanordnung enthält zunächst eine Gewindestange mit einem Holzgewinde. Diese Gewindestange wird in eine in der Holzkonstruktion vorhandene Bohrung eingeschraubt. Holzgewinde unterscheiden sich wegen ihres Anwendungsbereichs in ihrer Form und Ausgestaltung von den metrischen Gewinden. Im Stand der Technik gibt es keine Muttern, die auf eine mit einem Holzgewinde versehene Gewindestange aufgeschraubt werden können. Die Erfindung schlägt nun vor, eine Mutter zu schaffen, die ein dem Holzgewinde der Gewindestange komplementäres Innengewinde aufweist. Die Gewindestange wird nur soweit eingeschraubt, dass ein Teil von ihr aus der Oberfläche der Holzkonstruktionen herausragt. Dort kann ein weiterer Gegenstand, der ein Loch aufweist, auf den herausragenden Teil der Gewindestange aufgeschoben und mithilfe der Mutter gesichert werden.

Während übliche für das Einschrauben in Holz bestimmte Schrauben eine Schraubenspitze mit einem sich kontinuierlich verringernden Durchmesser aufweisen, schlägt die Erfindung in Weiterbildung vor, dass bei der Befestigungsanordnung die Gewindestange keine Spitze aufweist, sondern stumpf endet.

Die Gewindestange kann zum Einschrauben beispielsweise mit einem Spezialwerkzeug verdreht werden. Insbesondere schlägt die Erfindung vor, dass die Gewindestange keinen Antriebskopf mit einem über den Gewindeschaft vorspringenden Durchmesser aufweist. Die Stange kann beispielsweise an beiden Enden ein stumpfes Ende aufweisen, bis zu dem das Gewinde reicht. Das vordere und hintere Ende werden auf diese Weise ununterscheidbar.

In nochmaliger Weiterbildung der Erfindung kann vorgesehen sein, dass die Gewindestange zum Verstärken von besonders belasteten Holzkonstruktionen vorgesehen ist. Anstelle der bekannten Stahlstäbe kann die Gewindestange in verbesserter Weise zur Verstärkung solcher Holzkonstruktionen dienen, wobei gleichzeitig noch eine Befestigungsmöglichkeit an einer der beiden Seiten vorhanden ist.

Insbesondere wird vorgeschlagen, die Gewindestange nur soweit einzuschrauben, dass beispielsweise das äußere Ende der Gewindestange aus der Oberfläche der Holzkonstruktionen so weit herausragt, dass die Mutter noch vollständig auf die Gewindestange aufgeschraubt werden kann.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht einer Gewindestange einer Befestigungsanordnung nach der Erfindung;
- Figur 2: eine vergrößerte Einzelansicht eines Gewindegangs;
- Figur 3: einen Schnitt durch eine mit der Gewindestange der Figur 1 zusammenwirkende Mutter und
- Figur 4: schematisch die Anordnung in Verbindung mit einer Holzkonstruktionen.

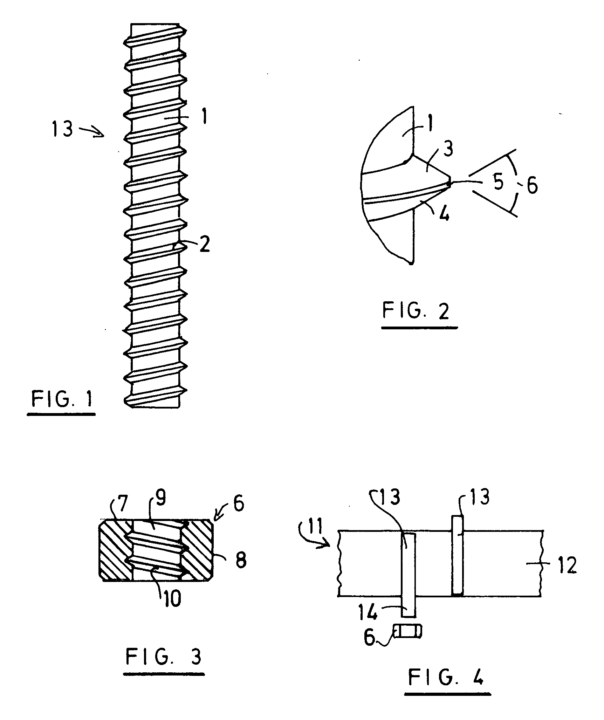

Figur 1 zeigt eine Gewindestange 13 mit einem Gewindeschaft 1 konstanten Durchmessers und einem auf den Gewindeschaft 1 aufgewalzten Gewinde 2. Bei dem Gewinde 2 handelt es sich um ein Holzgewinde, das so ausgebildet ist, dass sich die Gewindestange beim Einschrauben in ein Loch in einem Stück Holz ein Gewinde selbst formt. Das Holzgewinde erstreckt sich über die gesamte Länge der Gewindestange, die an beiden Enden stumpf endet. Daher ist eine Unterscheidung zwischen vorderem und hinterem Ende gar nicht möglich. Das Holzgewinde 2 weist einen Flankenwinkel 6 von angenähert 60° auf. Die beiden Gewindeflanken 3, 4 treffen sich in einer leicht abgestumpften Gewindekante 5.

Als Beispiel ist ein Außendurchmesser von 16 mm genannt, bei dem der Kerndurchmesser des Gewindeschafts 1 etwa 12 mm beträgt.

Zwischen den Gewindegängen verläuft der Gewindeschaft 1 zylindrisch.

Figur 3 zeigt einen Querschnitt durch eine Mutter 6, die mit der Gewindestange der Figur 1 zusammen wirken soll. Die Mutter 6 weist zwei parallele Stirnflächen 7 und einen Außenumfang 8 auf, der üblicherweise die Form eines Sechsecks aufweist. In der Mitte ist eine Innenbohrung 9 vorhanden, die von einer Stirnfläche 7 zu der anderen Stirnfläche 7 durchgeht. In der Wandung der Innenbohrung 9 ist ein Innengewinde 10 ausgebildet. Bei dem Innengewinde 10 handelt es sich um ein dem Holzgewinde 2 der Gewindestange 13 komplementäres Gewinde, also ebenfalls um ein Holzgewinde. Eine mit dem gleichen Innendurchmesser versehene metrische Mutter lässt sich auf eine Gewindestange mit einem Holzgewinde nicht aufschrauben.

Figur 4 zeigt eine mögliche Anwendung einer Befestigungsanordnung, die aus einer Gewindestange nach Figur 1 und einer Mutter nach Figur 3 besteht. In einer Holzkonstruktion 11, beispielsweise einen Träger 12, ist eine Gewindestange 13 eingeschraubt, die in Figur 4 nur schematisch dargestellt ist. Diese Gewindestange 13 ist so eingeschraubt, dass sie auf der einen Seite, in Figur 4 also entweder oben oder unten, über die jeweilige Oberfläche der Holzkonstruktion vorsteht. Die Aufgabe der Gewindestange ist es, einen besonders belasteten Teil einer Holzkonstruktion zu stabilisieren. Dies geschieht aufgrund der Gewindegänge mit größerer Wirkung als bei einer reinen glatten Stahlstange. Auf den aus der jeweiligen Oberseite der Holzkonstruktion 11 heraus ragenden Teil 14 der Gewindestange 13 kann ein Gegenstand, der ein Loch aufweist, aufgeschoben und mithilfe der Mutter 6 befestigt werden. Selbstverständlich ist es auch denkbar, eine Gewindestange 13 so anzuordnen, dass sie auf beiden Seiten der Holzkonstruktion 11 aus der jeweiligen Oberfläche heraus ragt, so dass an beiden Enden ein Gegenstand befestigt werden kann.

Es ist natürlich auch möglich, auf den heraus ragenden Teil zwei Muttern aufzuschrauben, von denen eine als Kontermutter dienen kann.

## Patentansprüche

1. Befestigungsanordnung, enthaltend
1.1 eine Gewindestange (13) mit einem Holzgewinde (2), das
1.2 sich im wesentlichen über die gesamte Länge der Gewindestange (13) erstreckt, sowie mit
1.3 mindestens einer Mutter (6), die
1.4 eine Innenöffnung (9) mit einem dem Holzgewinde (2) der Gewindestange (13) entsprechenden Gegengewinde (10) aufweist.

2. Befestigungsanordnung nach Anspruch 1, bei der die Gewindestange (13) keine Spitze aufweist.

3. Befestigungsanordnung nach Anspruch 1 oder 2, bei der die Gewindestange (13) keinen im Durchmesser gegenüber dem Schraubenschaft (1) vergrößerten Antriebskopf aufweist.

4. Befestigungsanordnung nach einem der vorhergehenden Ansprüche, bei der die Gewindestange (13) zur Verstärkung von besonders belasteten Abschnitten von Holzkonstruktionen (11) vorgesehen ist.

5. Befestigungsanordnung nach Anspruch 4, bei der mindestens ein Ende (14) der Gewindestange (13) aus der Oberfläche der Holzkonstruktion (11) herausragt.
